# EUROPEAN PATENT APPLICATION

(11) **EP 4 598 162 A1**
(43) Date of publication of application: **06.08.2025**
(21) Application number: 23893277.6
(22) Date of filing: 14.08.2023
(51) Int. Cl.: H04W 60/00

(54) **COMMUNICATION METHOD, AND APPARATUS**

(30) Priority: 22.11.2022 CN 202211469154
(71) Applicant: Honor Device Co., Ltd., Shenzhen, Guangdong 518040 (CN)
(72) Inventor: DING, Ming, Shenzhen, Guangdong 518040 (CN); JIANG, Kunquan, Shenzhen, Guangdong 518040 (CN); ZHANG, Han, Shenzhen, Guangdong 518040 (CN); WU, Miaoling, Shenzhen, Guangdong 518040 (CN)
(74) Representative: Gill Jennings & Every LLP
(86) International application number: PCT/CN2023/112800
(87) International publication number: WO 2024/109178

(57) **Abstract**

This application provides a communication method and apparatus, and is applied to the field of communication technologies. The communication method provided in this application includes: receiving, by a first cell, a registration request message from a terminal device, and sending a plaintext ID query message to the terminal device, where the plaintext ID query message is used to request authentication of identity information of the terminal device; sending, by the terminal device, the identity information of the terminal device to the first cell in response to the plaintext ID query message; receiving, by the first cell, the identity information, and sending a registration reject message and an RRC RELEASE message to the terminal device according to the identity information, where the registration reject message carries a reject cause value that is a first reject cause value; and executing a disable instruction on the first cell in a case that the RRC RELEASE message includes redirection to a low-standard cell. The method provides a solution on how to escape when a terminal is frequently rejected by a network side, thereby helping the terminal device to register successfully.

## Description

This application claims priority to Chinese Patent Application No. 202211469154.6, filed with the China National Intellectual Property Administration on November 22, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With flourishing modern transportation and rapid economic growth, opportunities for people to travel abroad and conduct business have gradually increased, and mobility of people between different countries or different regions has increased. Usually, when people arrive at different regions, terminal devices used by the people perform network search and registration again, to ensure communication and network connection functions of the terminal devices.

### SUMMARY

Embodiments of this application provide a communication method and apparatus, to help a terminal device successfully register with a network.

To achieve the foregoing objective, the following technical solutions are used in the embodiments of this application:

According to a first aspect, a communication method is provided. The method includes: A terminal device sends an attach request message to an eighth cell if the terminal device fails to register with an IP multimedia system IMS. If the terminal device receives an attach reject message whose reject cause value is a first reject cause value, the terminal device records an occurrence time of the attach reject message. The eighth cell is an LTE cell. When the terminal device receives for a sixth quantity of times the attach reject message whose reject cause value is the first reject cause value, the terminal device performs an operation of disabling the eighth cell for a first preset time, in a case that the sixth quantity of times is greater than or equal to a sixth threshold and a time interval between two adjacent attach reject messages is less than a seventh threshold. The sixth threshold is less than 5. An operation of disabling an LTE cell corresponding to a first operator is performed on the terminal device for a second preset time in a case that the terminal device receives for a target quantity of times the attach reject message whose reject cause value is the first reject cause value and the time interval between two adjacent registration failure messages is less than the seventh threshold. The first operator is consistent with an operator of a SIM card used by the terminal device.

That is, when the terminal device fails to register with the IMS and continuously receives a plurality of attach reject messages, it is set in this application that, when a quantity of the received attach reject messages is greater than or equal to the sixth threshold and the time interval between adjacent attach reject messages is less than the seventh threshold, the operation of disabling the eighth cell for the first preset duration is performed, where the sixth threshold is less than 5. It is stipulated in a communication protocol that when the terminal device is rejected five consecutive times, an LTE capability of the terminal device is disabled for 12 minutes. Because the sixth threshold is less than 5, this solution can enable the terminal device to initiate an attach request message to at least two LTE cells, preventing the terminal device from always initiating an attach request to one cell, and providing an opportunity for the terminal device to attach to another cell. In this way, to some extent, it is avoided that the LTE capability of the terminal device is disabled for 12 minutes.

With reference to the foregoing first aspect, in a possible design, after the performing an operation of disabling the eighth cell for a first preset time, the method further includes: The terminal device sends an attach request message to a ninth cell. The ninth cell is an LTE cell, and the eighth cell is different from the ninth cell. After the eighth cell is disabled for the first preset time, a registration request may be further initiated to the ninth cell, to provide a plurality of opportunities for the terminal device for successful attachment.

With reference to the foregoing first aspect, in a possible design, when the terminal device receives for a sixth quantity of times the attach reject message whose reject cause value is the fourth reject cause value, in a case that the sixth quantity of times is greater than or equal to a sixth threshold and a time interval between two adjacent attach reject messages is less than a seventh threshold, the method includes: controlling, when the terminal device receives for the sixth quantity of times the attach reject message whose reject cause value is the fourth reject cause value, the terminal device not to send a tracking area update complete message to the eighth cell, in a case that the sixth quantity of times is greater than or equal to the sixth threshold and the time interval between two adjacent attach reject messages is less than the seventh threshold.

With reference to the foregoing first aspect, in a possible design, the controlling, when the terminal device receives for the sixth quantity of times the attach reject message whose reject cause value is the fourth reject cause value, the terminal device not to send a tracking area update complete message to the eighth cell, in a case that the sixth quantity of times is greater than or equal to the sixth threshold and the time interval between two adjacent attach reject messages is less than the seventh threshold includes: setting first tagged data, when the terminal device receives for the sixth quantity of times the attach reject message whose reject cause value is the fourth reject cause value, in a case that the sixth quantity of times is greater than or equal to the sixth threshold and the time interval between two adjacent attach reject messages is less than the seventh threshold, where the first tagged data is used to identify that the terminal device skips sending the tracking area update complete message to the eighth cell; and skipping, by the terminal device according to the first tagged data, sending the tracking area update complete message to the eighth cell.

The eighth cell and the ninth cell to which the UE is connected may be cells under different TACs. When the eighth cell and the ninth cell are cells under different TACs, after the eighth cell is disabled, a TAU complete message originally to be sent to the eighth cell may be received by the ninth cell. In this way, a blank period of 25s is generated in the ninth cell. Within the 25s, the terminal device cannot be connected to a network. Therefore, in this application, the first tagged data is set. In this scenario, the first tagged data indicates the UE not to send a TAU complete message, thereby avoiding the subsequent blank period of 25s, and improving network usage experience of a user.

With reference to the foregoing first aspect, in a possible design, the first reject cause value is #16 or #17.

With reference to the foregoing first aspect, in a possible design, the sixth threshold is 3.

With reference to the foregoing first aspect, in a possible design, the seventh threshold is 60s.

According to a second aspect, a communication method is provided. The method includes: A terminal device sends a registration request message to a first cell. The terminal device receives a plaintext ID query message from the first cell. The plaintext ID query message is used to request authentication of identity information of the terminal device, and the plaintext ID query message is a message that is not subject to integrity protection and encrypted protection. The terminal device sends the identity information of the terminal device to the first cell in response to the plaintext ID query message. The terminal device receives a registration reject message and an RRC RELEASE message from the first cell. A reject cause value carried in the registration reject message is a first reject cause value, and the first reject cause value is #9. In a case that the RRC RELEASE message includes an instruction for redirecting to a low-standard cell, the terminal device performs an operation of disabling the first cell for a third preset time.

That is, when the terminal device receives the plaintext ID query message, the registration reject message whose reject cause value is the first reject cause value, and the RRC RELEASE message including the redirection to the low-standard cell, it indicates that the first cell is a cell served by a rogue base station. After initiating a registration request, the terminal device is always redirected to the low-standard cell, affecting network usage experience of a user. Therefore, in this application, in this case, a disable instruction is executed on the first cell, to avoid that the terminal device is still redirected to the low-standard cell after initiating the registration request again. This improves network usage experience of a user to some extent.

With reference to the foregoing second aspect, in a possible design, the RRC RELEASE message is used to indicate the terminal device to release a link. After the sending a registration reject message and an RRC RELEASE message to the terminal device according to the identity information, the method further includes: The terminal device releases the link in response to the RRC RELEASE message. The terminal device continues to send the registration request message to the first cell. If the terminal device receives for a first quantity of times the registration reject message whose reject cause value is the first reject cause value, the terminal device performs the operation of disabling the first cell for the third preset time, in a case that the first quantity of times is greater than or equal to a first threshold.

In this application, a quantity of times of the registration reject message whose reject cause value is the first reject cause value is recorded, and the disable operation is performed on the first cell when the quantity of times reaches a specified threshold. In this way, it is avoided that the terminal device is still redirected to the low-standard cell after initiating the registration request again. This improves network usage experience of a user to some extent.

With reference to the foregoing second aspect, in a possible design, the method further includes: The terminal device sends a registration request message to a second cell. The first cell is different from the second cell. After performing the disable operation on the first cell, the terminal device sends the registration request message to the second cell other than the first cell when the terminal device initiates a registration request again.

With reference to the foregoing second aspect, in a possible design, the first threshold is 3.

According to a third aspect, a communication method is provided. The method includes: If a terminal device successfully registers with a third cell in a standalone SA architecture, the terminal device sends a service request message to the third cell. If the terminal device receives a service reject message whose reject cause value is a second reject cause value, the terminal device records an occurrence time of the service reject message. The terminal device is controlled, if the terminal device receives the service reject message whose reject cause value is the second reject cause value for a second quantity of times within target preset duration starting from the occurrence time of the service reject message, to redirect to a fourth cell in a case that the second quantity of times is greater than or equal to a second threshold. The fourth cell is an LTE cell.

That is, when the terminal device successfully registers with the third cell in the standalone SA architecture and initiates a service request to the third cell, the terminal device receives, a plurality of times within the target preset duration, the service reject message whose reject cause value is the second reject cause value. When the quantity of reception times of the service reject message exceeds a threshold, it indicates that the cell in which the terminal device requests a service has a problem and cannot provide the service for the terminal device. Therefore, in this case, the terminal device is controlled to redirect to the fourth cell with a lower standard than the third cell, so that the service is provided for the terminal device by the fourth cell. In this way, network usage experience of a user is improved.

With reference to the foregoing third aspect, in a possible design, before the if the terminal device receives the service reject message whose reject cause value is the second reject cause value for a second quantity of times within target preset duration starting from the occurrence time of the service reject message, the method further includes: When the terminal device receives the service reject message whose reject cause value is the second reject cause value for a third quantity of times within the target preset duration starting from the occurrence time of the service reject message, the third quantity of times is set to 0 if the third quantity of times is less than the second threshold and the terminal device triggers a target operation. The target operation is a flight mode operation or a card insertion and removal operation.

With reference to the foregoing third aspect, in a possible design, the terminal device includes a first SIM card and a second SIM card. That the terminal device is controlled, if the terminal device receives the service reject message whose reject cause value is the second reject cause value for a second quantity of times within target preset duration starting from the occurrence time of the service reject message, to redirect to a fourth cell in a case that the second quantity of times is greater than or equal to a second threshold includes: The second SIM card is controlled, at a first moment, when the first SIM card in the terminal device is in a first state and the second SIM card receives the service reject message whose reject cause value is the second reject cause value for the second quantity of times within the target preset duration starting from the occurrence time of the service reject message, to redirect to the fourth cell if the second quantity of times is greater than or equal to the second threshold. The first moment is a moment at which the first SIM card switches from the first state to a second state, the first state is a call state, and the second state is a call end state.

With reference to the foregoing third aspect, in a possible design, the second reject cause value is #9 or #10.

With reference to the foregoing third aspect, in a possible design, the target preset duration is 60s.

With reference to the foregoing third aspect, in a possible design, the second threshold is 3.

With reference to the foregoing third aspect, in a possible design, a plurality of service reject messages are from a same cell or different cells in the SA architecture.

According to a fourth aspect, a communication method is provided. The method includes: A terminal device sends a registration request message to a fifth cell, and if the terminal device receives a registration failure message whose reject cause value is a third reject cause value, the terminal device records an occurrence time of the registration failure message. When the terminal device receives for a fourth quantity of times the registration failure message whose reject cause value is the third reject cause value, if the fourth quantity of times is greater than or equal to a third threshold and a time interval between two adjacent registration failure messages is less than a fourth threshold, the terminal device performs an operation of disabling the fifth cell for a fourth preset time. The fifth cell is an LTE cell.

An operation of disabling an LTE cell corresponding to a second operator is performed for the terminal device for a fifth preset time in a case that the terminal device receives for a target quantity of times the attach reject message whose reject cause value is the third reject cause value and the time interval between two adjacent registration failure messages is less than the fourth threshold. The second operator is consistent with an operator of a SIM card used by the terminal device.

That is, when the terminal device initiates a registration request to the fifth cell, if a plurality of registration failure messages are continuously received, a quantity of the received registration failure messages is greater than the third threshold, and a time interval between adjacent registration failure messages is less than the fourth threshold, the fifth cell is disabled, and the third threshold is less than 5. It is stipulated in a communication protocol that when the terminal device is rejected five consecutive times, an LTE capability of the terminal device is disabled for 12 minutes. Because the third threshold is less than 5, this solution can enable the terminal device to initiate an attach request message to at least two LTE cells, preventing the terminal device from always initiating an attach request to one cell, and providing an opportunity for the terminal device to attach to another cell. In this way, to some extent, it is avoided that the LTE capability of the terminal device is disabled for 12 minutes.

With reference to the foregoing fourth aspect, in a possible design, the method further includes: The terminal device sends a registration request message to a sixth cell. The sixth cell is an LTE cell, and the fifth cell is different from the sixth cell. After the fifth cell is disabled, a registration request may be further initiated to the sixth cell, to provide a plurality of opportunities for the terminal device to be connected to a network.

With reference to the foregoing fourth aspect, in a possible design, the third reject cause value is #17.

With reference to the foregoing fourth aspect, in a possible design, the third threshold is 3.

With reference to the foregoing fourth aspect, in a possible design, the fourth threshold is 60s.

According to a fifth aspect, a communication apparatus is provided to implement the various methods described above. The communication apparatus may be the terminal device in any design of the first aspect to the fourth aspect, an apparatus including the terminal device, or an apparatus, for example, a chip, included in the terminal device. Alternatively, the communication apparatus may be a network device in any design of the first aspect to the fourth aspect, an apparatus including the network device, or an apparatus, for example, a chip, included in the network device. The communication apparatus includes a corresponding module, unit, or means (means) for implementing the foregoing method. The module, unit, or means may be implemented by hardware, by software, or by executing corresponding software by hardware. The hardware or the software includes one or more modules or units corresponding to the foregoing function.

According to a sixth aspect, a communication apparatus is provided, and includes a processor and a memory. The memory is configured to store computer instructions. The processor is configured to execute the instructions stored in the memory. When the processor executes the instructions, the communication apparatus is enabled to perform the method according to any one of the foregoing aspects. The communication apparatus may be the terminal device in any design of the first aspect to the fourth aspect, an apparatus including the terminal device, or an apparatus, for example, a chip, included in the terminal device. Alternatively, the communication apparatus may be a network device in any design of the first aspect to the fourth aspect, an apparatus including the network device, or an apparatus, for example, a chip, included in the network device.

According to a seventh aspect, a communication apparatus is provided, and includes a processor and an interface circuit. The interface circuit is configured to communicate with a module other than the communication apparatus. The processor is configured to run a computer program or instructions to perform the method according to any one of the foregoing aspects. The communication apparatus may be the terminal device in any design of the first aspect to the fourth aspect, an apparatus including the terminal device, or an apparatus, for example, a chip, included in the terminal device. Alternatively, the communication apparatus may be a network device in any design of the first aspect to the fourth aspect, an apparatus including the network device, or an apparatus, for example, a chip, included in the network device.

Alternatively, the interface circuit may be a code/data read/write interface circuit, and the interface circuit is configured to: receive computer-executable instructions (the computer-executable instructions are stored in a memory, and may be directly read from the memory, or may pass through another device), and transmit the computer-executable instructions to the processor, so that the processor runs the computer-executable instructions to perform the method according to any one of the foregoing aspects.

In some possible designs, the communication apparatus may be a chip or a chip system.

According to an eighth aspect, a communication apparatus is provided, and includes a processor. The processor is configured to: be coupled to a memory, read instructions from the memory, and then perform the method according to any one of the foregoing aspects according to the instructions. The communication apparatus may be the terminal device in any design of the first aspect to the fourth aspect, an apparatus including the terminal device, or an apparatus, for example, a chip, included in the terminal device. Alternatively, the communication apparatus may be a network device in any design of the first aspect to the fourth aspect, an apparatus including the network device, or an apparatus, for example, a chip, included in the network device.

According to a ninth aspect, a computer-readable storage medium is provided. The computer-readable storage medium stores instructions. When the instructions are run on a communication apparatus, the communication apparatus is enabled to perform the method according to any one of the foregoing aspects. The communication apparatus may be the terminal device in any design of the first aspect to the fourth aspect, an apparatus including the terminal device, or an apparatus, for example, a chip, included in the terminal device. Alternatively, the communication apparatus may be a network device in any design of the first aspect to the fourth aspect, an apparatus including the network device, or an apparatus, for example, a chip, included in the network device.

According to a tenth aspect, a computer program product including instructions is provided. When the computer program product is run on a communication apparatus, the communication apparatus is enabled to perform the method according to any one of the foregoing aspects. The communication apparatus may be the terminal device in any design of the first aspect to the fourth aspect, an apparatus including the terminal device, or an apparatus, for example, a chip, included in the terminal device. Alternatively, the communication apparatus may be a network device in any design of the first aspect to the fourth aspect, an apparatus including the network device, or an apparatus, for example, a chip, included in the network device.

According to an eleventh aspect, a communication apparatus (for example, the communication apparatus may be a chip or a chip system) is provided. The communication apparatus includes a processor, configured to implement the function involved in any one of the foregoing aspects. In a possible design, the communication apparatus further includes a memory. The memory is configured to store necessary program instructions and data. When being a chip system, the communication apparatus may include a chip, or may include a chip and another discrete device.

According to a twelfth aspect, a communication system is provided. The communication system includes a terminal device and a network device. The terminal device may perform the method in any design of the first aspect to the fourth aspect, and the network device may perform the method in any design of the first aspect to the fourth aspect.

### BRIEF DESCRIPTION OF DRAWINGS

FIG. 1 is a diagram of a structure of a communication system according to an embodiment of this application;
FIG. 2 is a diagram of a structure of a communication apparatus according to an embodiment of this application;
FIG. 3 is a diagram of a hardware structure of a terminal device according to an embodiment of this application;
FIG. 4 is a first schematic flowchart of a communication method according to an embodiment of this application;
FIG. 5 is a second schematic flowchart of a communication method according to an embodiment of this application;
FIG. 6 is a schematic flowchart of a terminal device initiating registration with a network side device according to an embodiment of this application;
FIG. 7 is a third schematic flowchart of a communication method according to an embodiment of this application;
FIG. 8 is a fourth schematic flowchart of a communication method according to an embodiment of this application;
FIG. 9 is a fifth schematic flowchart of a communication method according to an embodiment of this application;
FIG. 10 is a sixth schematic flowchart of a communication method according to an embodiment of this application;
FIG. 11 is a seventh schematic flowchart of a communication method according to an embodiment of this application; and
FIG. 12 is a diagram of a structure of a chip system according to an embodiment of this application.

### DESCRIPTION OF EMBODIMENTS

Technical solutions in embodiments of this application are described below with reference to drawings in the embodiments of this application. In the descriptions of this application, unless otherwise specified, "/" indicates an "or" relationship between associated objects. For example, A/B may indicate A or B. In this application, "and/or" is merely an association relationship for describing associated objects, and indicates that three relationships may exist. For example, A and/or B may indicate the following three cases: only A exists, both A and B exist, and only B exists, where A and B may be singular or plural. In addition, in the descriptions of this application, unless otherwise specified, "a plurality of" means two or more. "At least one item (piece) of the following" or a similar expression thereof refers to any combination of these items, including a single item (piece) or any combination of a plurality of items (pieces). For example, at least one item (piece) of a, b, or c may represent: a, b, c, a-b, a-c, b-c, or a-b-c, where a, b, and c may be singular or plural. In addition, to facilitate clear description of the technical solutions in embodiments of this application, in embodiments of this application, terms such as "first" and "second" are used to distinguish same items or similar items having substantially the same function and role. A person skilled in the art may understand that the terms, such as "first" and "second", do not limit a quantity or an execution sequence, and the terms, such as "first" and "second", do not indicate a definite difference. In addition, in the embodiments of this application, the word such as "example" or "for example" is used to represent giving an example, an illustration, or a description. Any embodiment or design solution described as "in an example" or "for example" in embodiments of this application should not be explained as being more preferred or having more advantages than another embodiment or design solution. Exactly, use of the word such as "example" or "for example" is intended to present a related concept in a specific manner, to facilitate understanding.

In addition, the network architecture and the service scenario described in the embodiments of this application are intended to describe the technical solutions in the embodiments of this application more clearly, and do not constitute a limitation on the technical solutions provided in the embodiments of this application. A person of ordinary skill in the art may learn that with evolution of the network architecture and emergence of new service scenarios, the technical solutions provided in the embodiments of this application are also applicable to similar technical problems.

A terminal device (UE) is rejected in a plurality of scenarios in which network communication is performed. For example, the UE initiates a registration request to a cell to which a rogue base station belongs, and receives a registration reject message. The UE successfully registers with a cell in an standalone (Standalone, SA) architecture, but receives a service reject message. The UE fails to register with an IMS, and receives an attach reject message. Moreover, the UE receives a registration reject message when initiating a registration request to an LTE cell.

Usually, after being rejected, the UE initiates a procedure again. When a quantity of rejected times exceeds a particular threshold, a particular network limitation is caused to the UE. For example, the UE is prohibited from being connected to a network within a period of time. Alternatively, the UE is redirected to a low-standard cell, or the like. Therefore, when registration of UE fails, how to escape from a problematic cell is a problem that needs to be urgently resolved.

Therefore, for different cases, this application provides corresponding handling methods, so that the UE escapes from different rejection scenarios, thereby improving usage experience of a user.

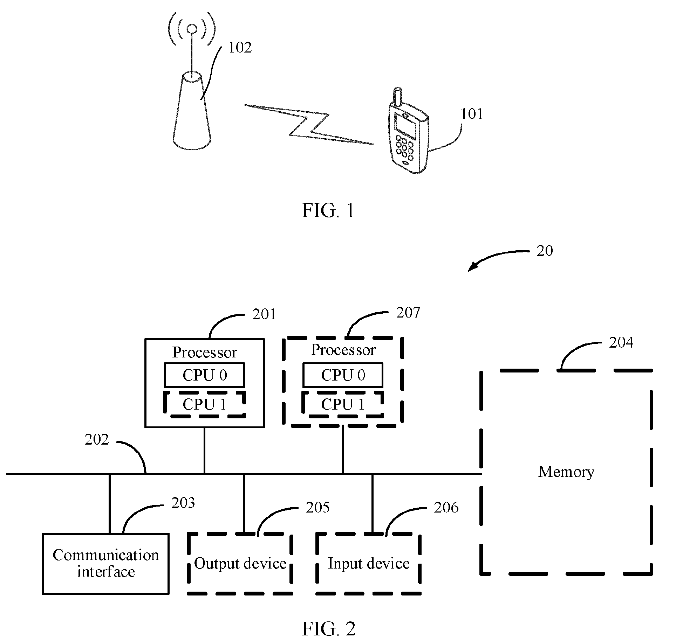

FIG. 1 is a diagram of a structure of a communication system according to an embodiment of this application. As shown in FIG. 1, the communication system includes a terminal device 101 and a network device 102. The network device 102 is an access network device that currently provides a service for the terminal device 101.

A system architecture described in the embodiments of this application is intended to describe the technical solutions in the embodiments of this application more clearly, and does not constitute a limitation on the technical solutions provided in the embodiments of this application. A person of ordinary skill in the art may learn that with evolution of network architectures and emergence of new service scenarios, the technical solutions provided in the embodiments of this application are also applicable to a similar technical problem.

The network device 102 in the embodiments of this application is a device that connects a terminal device to a wireless network. In this application, if not otherwise specified, the network device 102 is a radio access network device. The network device 102 may be a base station (base station), an evolved NodeB (evolved NodeB, eNodeB), a transmission and reception point (transmission reception point, TRP), a next generation NodeB (next generation NodeB, gNB) in a 5G mobile communication system, a base station in a future mobile communication system, an access node in a wireless-fidelity (wireless-fidelity, Wi-Fi) system, or the like; or may be a module or a unit that completes some functions of a base station, for example, a centralized unit (central unit, CU) or a distributed unit (distributed unit, DU). In addition, the network device 102 may alternatively be a broadband network gateway (broadband network gateway, BNG), an aggregation switch, or a non-3GPP access device. The network device 102 may alternatively be a wireless controller in a cloud radio access network (cloud radio access network, CRAN), a transmission and reception point (transmission and reception point, TRP), a device including a TRP, or the like. A specific technology and a specific device form used by the network device 102 are not limited in the embodiments of this application.

The terminal device 101 in the embodiments of this application may be a device with a wireless transceiver function, and may be deployed on land, including indoors, outdoors, handheld, or in-vehicle; may be deployed on a water surface (for example, a ship); or may be deployed in the air (for example, on an aircraft, a balloon, or a satellite). The terminal device 101 may be user equipment (user equipment, UE), an access terminal, a terminal unit, a subscriber unit (subscriber unit), a terminal station, a mobile station (Mobile Station, MS), a mobile console, a remote station, a remote terminal, a mobile device, a wireless communication device, a terminal agent, a terminal apparatus, or the like in a 5G network or a future evolved public land mobile network (public land mobile network, PLMN). The access terminal may be a cellular phone (cellular phone), a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device or another processing device connected to a wireless modem, an in-vehicle device or a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. The terminal device 101 may be mobile or fixed. A specific type and structure of the terminal device 101 are not limited in the embodiments of this application.

Optionally, the terminal device 101 and the network device 102 in this embodiment of this application may use a composition structure shown in FIG. 2 or include a component shown in FIG. 2. FIG. 2 is a diagram of a structure of a communication apparatus 20 according to an embodiment of this application. As shown in FIG. 2, the communication device 20 includes one or more processors 201, a communication line 202, and at least one communication interface (in FIG. 2, only an example in which a communication interface 203 and one processor 201 are included is used for description), and optionally, may further include a memory 204.

The processor 201 may be a general-purpose central processing unit (central processing unit, CPU), a microprocessor, an application-specific integrated circuit (application-specific integrated circuit, ASIC), or one or more integrated circuits configured to control execution of a program in the solutions of this application.

The communication line 202 may include a channel for communication between different components.

The communication interface 203 may be a transceiver module, and is configured to communicate with another device or a communication network such as Ethernet, a RAN, or a wireless local area network (wireless local area networks, WLAN). For example, the transceiver module may be an apparatus such as a transceiver or a transceiver machine. Optionally, the communication interface 203 may alternatively be a transceiver circuit located in the processor 201, and is configured to implement signal input and signal output of the processor.

The memory 204 may be an apparatus with a storage function. For example, the memory 204 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, or the like), a magnetic disk storage medium or another magnetic storage device, or any other medium that can be configured to carry or store expected program code in a form of instructions or a data structure and that can be accessed by a computer. However, this is not limited thereto. The memory may exist independently, and connect to the processor by using the communication line 202. The memory may alternatively be integrated with the processor.

The memory 204 is configured to store computer-executable instructions for performing the solutions of this application, and is controlled and executed by the processor 601. The processor 201 is configured to execute the computer-executable instructions stored in the memory 204 to implement the communication method provided in the embodiments of this application.

Alternatively, optionally, in this embodiment of this application, the processor 201 may perform a processing-related function in the communication method provided in the following embodiments of this application. The communication interface 203 is responsible for communicating with another device or a communication network. This is not specifically limited in this embodiment of this application.

Optionally, the computer-executable instructions in this embodiment of this application may also be referred to as application program code. This is not specifically limited in this embodiment of this application.

In a specific implementation, in an embodiment, the processor 201 may include one or more CPUs, for example, a CPU 0 and a CPU 1 in FIG. 2.

In a specific implementation, in an embodiment, the communication apparatus 20 may include a plurality of processors, for example, the processor 201 and a processor 207 in FIG. 2. Each of these processors may be a single-core (single-core) processor or a multi-core (multi-core) processor. The processor herein may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores for executing software instructions to perform operations or processing.

In a specific implementation, in an embodiment, the communication apparatus 20 may further include an output device 205 and an input device 206. The output device 205 communicates with the processor 201, and may display information in a plurality of manners. For example, the output device 205 may be a liquid crystal display (liquid crystal display, LCD), a light emitting diode (light emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensing device.

The communication apparatus 20 sometimes may also be referred to as a communication device, and may be a general-purpose device or a dedicated device. For example, the communication apparatus 20 may be a desktop computer, a portable computer, a network server, a palmtop computer (personal digital assistant, PDA), a mobile phone, a tablet computer, a wireless terminal device, an embedded device, the foregoing terminal device, the foregoing network device, or a device having a structure similar to that in FIG. 2. A type of the communication apparatus 20 is not limited in this embodiment of this application.

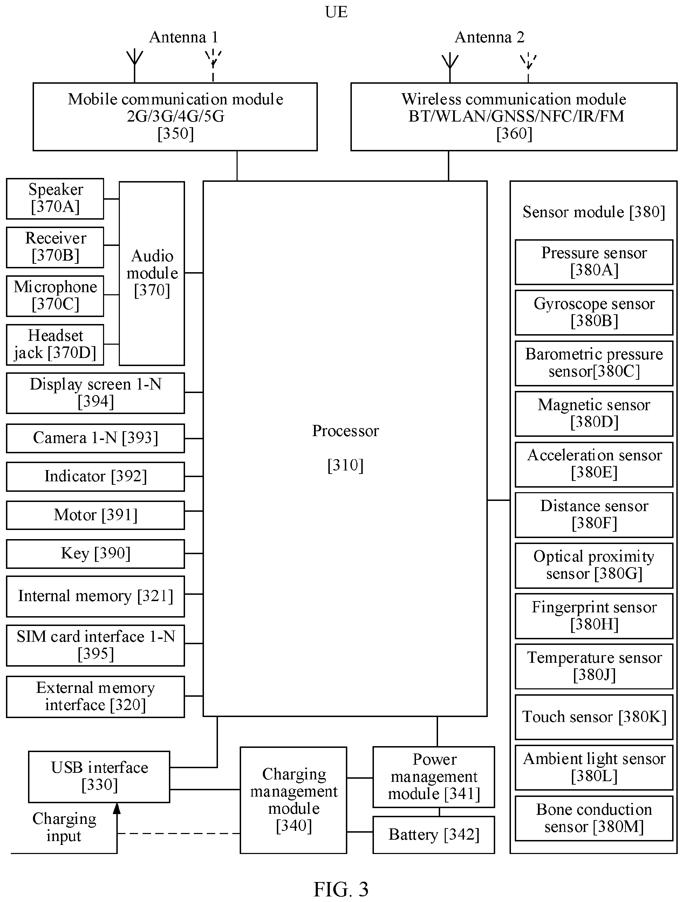

Optionally, FIG. 3 is a diagram of a hardware structure of a terminal device. As shown in FIG. 3, the terminal device may include a processor 310, an external memory interface 320, an internal memory 321, a universal serial bus (universal serial bus, USB) interface 330, a charging management module 340, a power management unit 341, a battery 342, an antenna 1, an antenna 2, a mobile communication module 350, a wireless communication module 360, an audio module 370, a speaker 370A, a phone receiver 370B, a microphone 370C, a headset jack 370D, a sensor module 380, a key 390, a motor 391, an indicator 392, a camera 393, a display screen 394, a subscriber identity module (subscriber identification module, SIM) card interface 395, and the like. The sensor module 380 may include a pressure sensor 380A, a gyroscope sensor 380B, a barometric pressure sensor 380C, a magnetic sensor 380D, an acceleration sensor 380E, a distance sensor 380F, an optical proximity sensor 380G, a fingerprint sensor 380H, a temperature sensor 380J, a touch sensor 380K, an ambient light sensor 380L, a bone conduction sensor 380M, and the like.

It may be understood that, the structure shown in this embodiment does not constitute a specific limitation on the terminal device. In some other embodiments, the terminal device may include more or fewer components than those shown in the figure, or some components may be combined, or some components may be split, or a different component deployment may be used. The components shown in the figure may be implemented by using hardware, software, or a combination of software and hardware.

The processor 310 may include one or more processing units. For example, the processor 310 may include an application processor (application processor, AP), a modem, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be separate devices, or may be integrated into one or more processors.

The charging management module 340 is configured to receive a charging input from a charger. The charger may be a wireless charger, or may be a wired charger.

The power management module 341 is configured to connect the battery 342, the charging management module 340, and the processor 310. The power management module 341 receives an input from the battery 342 and/or the charging management module 340, and supplies power to the processor 310, the internal memory 321, the display screen 394, the camera 393, the wireless communication module 360, and the like.

A wireless communication function of the terminal device may be implemented by using the antenna 1, the antenna 2, the mobile communication module 350, the wireless communication module 360, the modem, the baseband processor, and the like.

The antenna 1 and the antenna 2 are configured to transmit and receive an electromagnetic wave signal. Each antenna in the terminal device may be configured to cover one or more communication bands. Different antennas may further be multiplexed to improve utilization of the antennas.

The mobile communication module 350 may provide a solution for wireless communication including 2G/3G/4G/5G that is applied to the terminal device.

The wireless communication module 360 may provide a solution for wireless communication including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, and the like to be applied to the terminal device. The wireless communication module 360 may be one or more devices into which at least one communication processing module is integrated. The wireless communication module 360 receives an electromagnetic wave through the antenna 2, performs frequency modulation and filtering on a signal of the electromagnetic wave, and sends the processed signal to the processor 310. The wireless communication module 360 may further receive a to-be-sent signal from the processor 310, perform frequency modulation and amplification on the to-be-sent signal, and convert the signal into an electromagnetic wave for radiation through the antenna 2.

The terminal device implements a display function by using the GPU, the display screen 394, the application processor, and the like. The GPU is a microprocessor for image processing and connects the display screen 394 and the application processor.

The display screen 394 is configured to display an image, a video, or the like. A series of graphical user interfaces (graphical user interface, GUI) may be displayed on the display screen 394 of the terminal device.

The terminal device may implement a photographing function by using the ISP, the camera 393, the video codec, the GPU, the display screen 394, the application processor, and the like.

The camera 393 is configured to capture a static image or a video.

The external memory interface 320 may be configured to connect to an external memory card such as a micro SD card, to extend a storage capability of the terminal device.

The internal memory 321 may be configured to store computer-executable program code, and the executable program code includes instructions. The processor 310 executes various functional applications and data processing of the terminal device by running the instructions stored in the internal memory 321.

The terminal device may use the audio module 370, the speaker 370A, the receiver 370B, the microphone 370C, the headset jack 370D, the application processor, and the like, to implement an audio function, such as music playback or recording. The terminal device may further include the pressure sensor 380A, the barometric pressure sensor 380C, the gyroscope sensor 380B, the magnetic sensor 380D, the acceleration sensor 380E, the distance sensor 380F, the optical proximity sensor 380G, the ambient light sensor 380L, the fingerprint sensor 380H, the temperature sensor 380J, the touch sensor 380K, the bone conduction sensor 380M, the key 390, the motor 391, the indicator 392, and the like.

The SIM card interface 395 is configured to be connected to a SIM card. The SIM card may be inserted into the SIM card interface 395 or unplugged from the SIM card interface 395 to come into contact with or be separated from the terminal device. The terminal device may support one or N SIM card interfaces, where N is a positive integer greater than 1. The SIM card interface 395 may support a Nano SIM card, a Micro SIM card, a SIM card, or the like. A plurality of cards may be inserted into the same SIM card interface 395 together. The SIM card interface 395 may be further compatible with an external memory card. The terminal device interacts with a network through the SIM card, to implement a call function, a data communication function, and the like.

In addition, an operating system, for example, a Harmony operating system, an iOS operating system, an Android operating system, or a Windows operating system, is run on the components. An application program may be installed and run on the operating system. In some other embodiments, a plurality of operating systems may run in the terminal device.

It should be understood that the hardware module included in the terminal device shown in FIG. 3 is merely described by using an example, and does not constitute a limitation on a specific structure of the terminal device. Actually, the terminal device provided in this embodiment of this application may further include another hardware module having an interaction relationship with the hardware module shown in the figure. This is not specifically limited herein. For example, the terminal device may further include a flash or a micro projection apparatus. For another example, if the terminal device is a PC, the terminal device may further include components such as a keyboard and a mouse.

The communication method provided in the embodiments of this application is described below with reference to FIG. 1 to FIG 3. The device in the following embodiments may include the component shown in FIG. 3. The actions, terms, and the like in the embodiments of this application may be mutually referenced. This is not limited. In the embodiments of this application, a name of a message or a name of a parameter in a message exchanged between devices is merely an example. In a specific implementation, another name may be used. This is not limited.

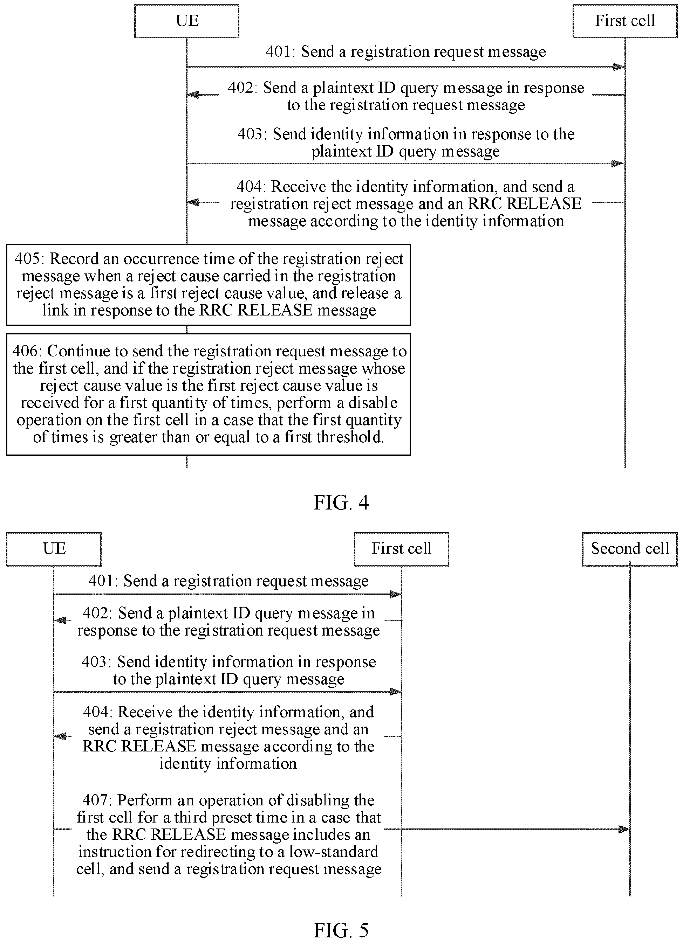

In a possible embodiment, using an example in which the terminal device is UE, a flowchart of a communication method provided in an embodiment of this application may be shown in FIG. 4. Referring to FIG. 4, the communication method may include the following steps:

Step S401: UE sends a registration request message to a first cell.

The registration request message is used to request to update a location of the UE in a network.

Usually, when the UE (for example, a mobile phone) is in a state of having no network service, the UE searches for a network and initiates a registration procedure, for example, after the UE is switched on, a flight mode is switched off, or a network is disconnected. In default settings, the UE preferentially searches for a network with a highest standard. For example, if the UE supports 3G, 4G, and 5G, the UE first searches for a 5G network. Alternatively, a user may select, from the settings of the UE, a network mode that is to be preferentially searched.

Nowadays, a rogue base station exists, and a first cell served by the rogue base station has relatively high reference signal received power (Reference Signal Receiving Power, RSRP). When the location of the UE changes and a network connection needs to be performed again, because the first cell has relatively high RSRP, if the UE measures the first cell, the UE initiates a tracking area update (Track area update, TAU) procedure, to attempt to connect to the first cell, to update the location of the UE in the network.

Alternatively, when the UE is powered on or off again or reestablishes a network connection in response to a flight mode triggered by a user, if the UE measures a first cell, the UE initiates an ATTACH procedure to perform cell reselection, to attempt to connect to the first cell.

Step 402: The first cell sends a plaintext ID query message to the UE in response to the registration request message.

Generally, a cell sends a Security Mode Command (security mode command) message to the UE in response to a registration request message. The Security Mode Command message specifies which type of security context is to be used to perform integrity protection and encrypted protection on a NAS message, and indicates, by using a Kasme field, an evolved packet system (Evolved Packet System, EPS) security context that needs to be invested in use or modified. After receiving the Security Mode Command message, the UE requests an underlying Packet Data Convergence Protocol (Packet Data Convergence Protocol, PDCP) to perform an integrity protection check on the message. If the integrity check performed by the UE on the Security Mode Command message succeeds, and Replayed UE security capabilities and Replayed NONCEUE (to be checked when a mapped security context needs to be used) are consistent with UE security capabilities and NONCEUE sent by using an attach request, the check succeeds. After the check succeeds, the UE sends a Security Mode COMPLETE message to the cell, and performs integrity protection and encrypted protection on the message. In this case, it is considered that the security mode is activated. Subsequently, all messages exchanged between the terminal and the cell are considered to be subject to integrity protection and encrypted protection.

The plaintext ID query message is an identity request message (Identity request) that is not subject to integrity protection and encrypted protection and that is sent by the first cell to the UE. The identity request message is used to request authentication of identity information of the UE.

Step 403: The UE sends identity information of the UE to the first cell in response to the plaintext ID query message.

Step 404: The first cell receives the identity information, and sends a registration reject message and an RRC RELEASE message to the UE according to the identity information.

The registration reject message carries a reject cause value. The RRC RELEASE message is used to indicate the UE to release a link.

The first cell may reject the registration request of the UE for a plurality of different reasons. For example, the base station to which the first cell belongs is a rogue base station, and therefore, rejects a registration request of the UE, and sends a registration reject message to the UE. When sending the registration reject message, the first cell further sends an RRC RELEASE message to the UE. The RRC RELEASE message is used to indicate the UE to release a link.

Step 405: The UE records an occurrence time of the registration reject message when a reject cause carried in the registration reject message is a first reject cause value, and releases a link in response to the RRC RELEASE message.

The first reject cause value is #9, and #9 indicates that the network cannot export a UE identifier.

The UE receives the registration reject message and the RRC RELEASE message that are sent by the first base station. When the reject cause carried in the registration reject message is the first reject cause value, the UE records the occurrence time of the registration reject message. In addition, the link is released in response to the RRC RELEASE message, and this registration procedure ends.

Step 406: The UE continues to send the registration request message to the first cell, and if the UE receives the registration reject message whose reject cause value is the first reject cause value for a first quantity of times, the UE performs a disable operation on the first cell for a third preset time in a case that the first quantity of times is greater than or equal to a first threshold.

After the UE receives the registration request message and the RRC RELEASE message, if the RRC RELEASE message is used to indicate the terminal to release the link, the procedure ends. Subsequently, the UE continues to send the registration request message to the first cell. Because a location of the UE does not change, in this case, the UE may initiate registration based on an attach procedure (ATTACH). The UE may receive a registration reject message a plurality of times, and determine a reject cause value carried in the registration reject message received each time. When the reject cause value is the first reject cause value, a quantity of times for receiving the registration reject message is recorded.

If the UE receives the registration reject message whose reject cause value is the first reject cause value for the first quantity of times, in a case that the first quantity of times is greater than or equal to the first threshold, it indicates that the UE cannot be connected to the first cell. To reduce power consumption caused by repeated registration initiation by the UE, in this case, the disable operation may be performed on the first cell. Time intervals between a plurality of registration reject messages received by the UE do not exceed a preset threshold. When initiating a registration request again, the UE may send a registration request message to a second cell other than the first cell.

For example, the first quantity of times is 3, and the first threshold is 3. The first reject cause value is #9, and the third preset time is 10 minutes. Performing the disable operation on the first base station may be setting a CELL ID of the first cell into a cell blacklist. The UE continues to send the registration request message to the first cell. If the UE receives a registration reject message whose reject cause value is #9 from the first cell three times, the UE sets the CELL ID of the first cell into the cell blacklist.

Optionally, as shown in FIG. 5, after step 404, the method further includes:
Step 407: The UE performs an operation of disabling the first cell for a third preset time in a case that the RRC RELEASE message includes an instruction for redirecting to a low-standard cell, and the UE sends a registration request message to a second cell.

The first cell is different from the second cell.

In some embodiments, after the UE receives the RRC RELEASE message, if the RRC RELEASE message further includes redirection to a target cell, the UE is connected to the target cell according to the RRC RELEASE message. The target network may be any one of a same-standard cell, a high-standard cell, or a low-standard cell. The same-standard cell is a cell that belongs to a same network level as the first cell. A network level of the high-standard cell is higher than that of the first cell. A network level of the low-standard cell is lower than that of the first cell. For example, if the first cell is connected to a Long Term Evolution (Long Term Evolved, LTE) network, the same-standard cell is an LTE cell, the high-standard cell is a 5G cell, and the low-standard cell is a GSM cell.

When the target cell in the RRC RELEASE message is the same-standard cell or the high-standard cell, the UE performs an operation corresponding to RRC RELEASE and is connected to the same-standard cell or the high-standard cell, and the entire procedure ends.

When the target cell in the RRC RELEASE message is the low-standard cell, the UE performs an operation corresponding to the RRC RELEASE message, and registers with the low-standard cell. Because a network speed of the low-standard cell is relatively slow, network camping experience of a user is affected. Subsequently, after the UE continues to send the registration request message to the first cell, the UE may be redirected to the low-standard cell again. To prevent the UE from being redirected to the low-standard cell for a plurality of times, it is set in this application that, after the UE receives the message for redirecting to the low-standard cell sent by the first cell, the UE triggers the disable operation on the first cell. Usually, the disable operation on the first cell is maintained for 10 minutes.

Usually, when the first cell sends the RRC RELEASE message, and the RRC RELEASE message includes redirection to a low-standard cell, the UE chooses to avoid redirecting to the low-standard cell in a local link release manner. However, because the first cell sends the RRC RELEASE message fast, the UE has received the RRC RELEASE message from the first cell before implementing the local link release. Therefore, the UE can be redirected only to the low-standard cell. Therefore, in this case, it is set in this application that, the UE performs the disable operation on the first cell. When the UE initiates the registration request message again, the UE does not reselect to the first cell within the third preset duration, to avoid a case in which the UE is redirected to a low-standard cell, thereby improving the network camping experience of the user to some extent. For example, the first cell and the second cell may be 5G cells, or may be LTE cells.

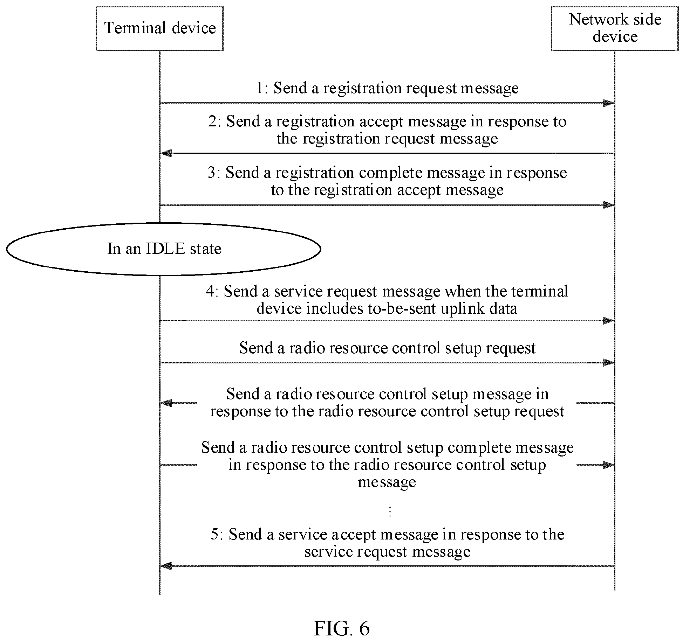

FIG. 6 shows a procedure in which a terminal device initiates registration to a network side device in an SA architecture.
1: The terminal device sends a registration request message (Registration Request) to the network side device.
   The registration request is used to request registration of the terminal device with a 5G network. The 5G network has a standalone SA networking manner.
2: The network side device sends a registration accept message (Registration Accept) to the UE in response to the registration request.
3: The terminal device sends a registration complete message (Registration Complete) to the network side device in response to the registration accept message.
4: The terminal device is in an IDLE state, and when the terminal device includes to-be-sent uplink data, the terminal device sends a service request message (Service Request) to the network side device.

The IDLE state is an idle state.

Specifically, in an actual communication process, when the terminal device switches from the IDLE state to a connected state to perform a data service, the terminal device needs to request the network side device to allocate a resource. Therefore, the terminal device and the network side device perform corresponding signaling interaction. For example, the terminal device sends a radio resource control setup request (RRC setup request) to the network side device. The network side device sends a radio resource control setup message (RRC setup) to the terminal device in response to the RRC setup request. The terminal device sends a radio resource control setup complete message (RRC setup Complete) and the like to the network side device in response to RRC setup.

5: The network side device sends a service accept message to the terminal device in response to the service request message.

Specifically, the network side device provides a corresponding service for the terminal device in response to the service request message.

Currently, it is found through statistics collection based on a large amount of data that when the fifth step of the foregoing registration procedure is performed, the network side device may send a service reject message (service reject) to the terminal device. The service reject message carries a reject cause value, and the reject cause value is #9 or #10. #10 indicates implicit deregistration. After the terminal device receives the service reject message from the network side device, the terminal device still repeatedly initiates the foregoing registration procedure to the network side device, and also repeatedly receives the service reject message from the network side device. In this way, not only a large amount of power consumption is caused to the terminal device, but also the data service cannot be performed on the terminal device.

Therefore, this application provides another communication method. The method is: when a reject cause value carried in a received service reject message is #9 or #10, recording a quantity of times and an occurrence frequency of the reject cause value; and when the quantity of times and the occurrence frequency satisfy a requirement, redirecting UE to an LTE cell, to avoid power consumption caused by frequently initiating a registration procedure by the UE, thereby improving network camping experience of a user.

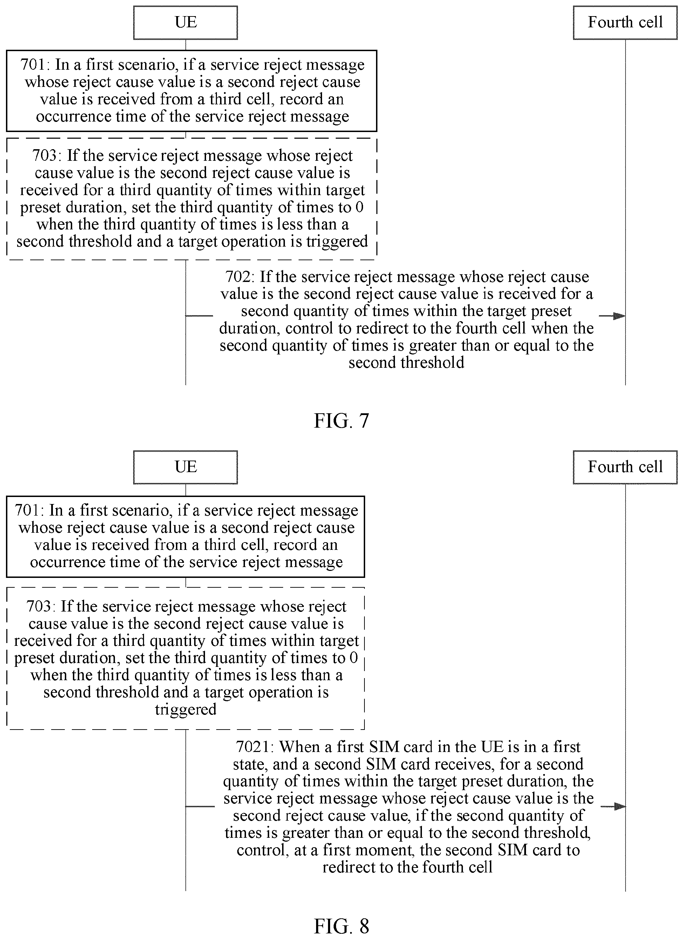

In a possible embodiment, using an example in which the terminal device is UE, a flowchart of a communication method provided in an embodiment of this application may be shown in FIG. 7. Referring to FIG. 7, the communication method may include the following steps:
Step 701: In a first scenario, if the UE receives a service reject message whose reject cause value is a second reject cause value from a third cell, record an occurrence time of the service reject message.

The first scenario is that the UE successfully registers with the third cell in an SA architecture, and the UE initiates a service request procedure. The second reject cause value is either #9 or #10. That the UE initiates a service request procedure includes that the UE sends a service request message to the third cell. The third cell is a 5G cell.

For example, the third cell may be a cell in the SA architecture. When the UE successfully registers with the third cell, the UE initiates a service request procedure. When the UE receives a service reject message sent by the third cell, and a reject cause value carried in the service reject message is a second reject cause value #9 or #10, an occurrence time of the service reject message is recorded.

Step 702: If the UE receives, for a second quantity of times within target preset duration, the service reject message whose reject cause value is the second reject cause value, control the UE to redirect to a fourth cell when the second quantity of times is greater than or equal to a second threshold.

The target preset duration is calculated starting from the occurrence time of the service reject message. The fourth cell is an LTE cell.

When the UE receives for the second quantity of times the service reject message whose reject cause value is the second reject cause value, when the second quantity of times is greater than or equal to the second threshold, it indicates that the third cell to which the UE currently attempts to be connected has a problem and cannot provide a data service for the UE. In this case, if the UE still continuously initiates a registration procedure, it not only wastes time, but also increases power consumption of the UE.

Therefore, in this application, when the reject cause value carried in the service reject message received by the UE is the second reject cause value, a counter is set to count a quantity of times of the service reject message. When the quantity of times for which the reject cause value is the second reject cause value is the second quantity of times, whether the second quantity of times is greater than or equal to the second threshold is determined. When the second quantity of times is greater than or equal to the second threshold, the UE is controlled to redirect to the fourth cell, and subsequently, a data service is provided for the UE through the fourth cell. A network standard of the fourth cell is lower than that of the third cell.

For example, the target preset duration may be one minute, the second quantity of times may be three times, and the second threshold may be three times. If the UE receives, three times within one minute, the service reject message whose reject cause value is the second reject cause value, the UE is controlled to redirect to the fourth cell. The fourth cell may be a cell of an LTE network. In addition, the LTE network may alternatively add a new radio (New Radio, NR) base station as a serving cell. After the UE successfully registers with the LTE network, a data service may be provided for the UE by using the NR base station, so that user experience is not affected.

Reject cause values in the three service reject messages received by the UE may all be #9; or all be #10. Alternatively, two reject cause values are #9, and one reject cause value is #10. Alternatively, two reject cause values are #10, and one reject cause value is #9. In this application, an order in which the reject cause value of #9 or the reject cause value of #10 is received is not limited, and only a quantity of times of a reject cause value is considered.

Optionally, the plurality of service reject messages may be from a same cell or different cells in the SA architecture.

For example, when the UE receives, three times within one minute, the service reject message whose reject cause value is #9, the three service reject messages may be from a same cell, two different cells, or three different cells in the SA architecture.

Optionally, as shown in FIG. 7, before step 702, the method further includes:
Step 703: If the UE receives, for a third quantity of times within the target preset duration, the service reject message whose reject cause value is the second reject cause value, set the third quantity of times to 0 when the third quantity of times is less than the second threshold and the UE triggers a target operation.

The target operation is a flight mode operation or a card insertion and removal operation.

Within the target preset duration, when the UE receives for the third quantity of times the service reject message whose reject cause value is the second reject cause value, if the third quantity of times is less than the second threshold and the UE triggers the target operation, location information of the UE may change. When the UE starts to perform a cell search, a previous cell may not be found. Therefore, within the target preset duration, when the UE receives for the third quantity of times the service reject message whose reject cause value is the second reject cause value, if the third quantity of times is less than the second threshold and the UE triggers the target operation, the counter sets the third quantity of times to 0 and then recounts. For example, the target preset duration may be one minute. The third quantity of times may be once or twice.

Optionally, as shown in FIG. 8, step 702 further includes:
Step 7021: When a first SIM card in the UE is in a first state, and a second SIM card receives, for a second quantity of times within the target preset duration, the service reject message whose reject cause value is the second reject cause value, if the second quantity of times is greater than or equal to the second threshold, control, at a first moment, the second SIM card to redirect to a fourth cell.

The reject cause value carried in the service reject message is the second reject cause value. The UE includes the first SIM card and the second SIM card. The first moment is a moment at which the first SIM card switches from the first state to a second state. The first state is a call state, and the second state is a call end state.

For example, the fourth cell is an LTE cell. The second quantity of times is 3, and the second threshold is 3. The UE includes two SIM cards, which are respectively a first SIM card and a second SIM card. When the first SIM card is in the call state, the second SIM card receives three times a service reject message whose reject cause value is #9 within one minute. When the first SIM card switches from the call state to a pass end state, the second SIM card is redirected to the LTE cell.

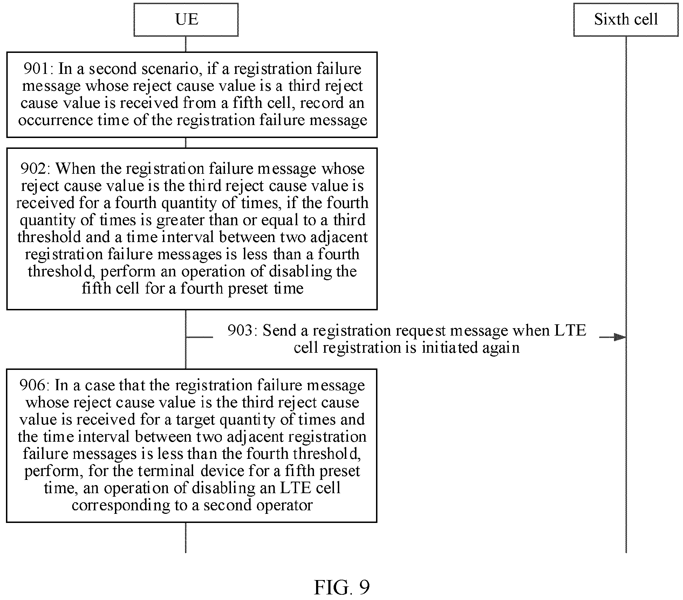

In a possible embodiment, using an example in which the terminal device is UE, a flowchart of a communication method provided in an embodiment of this application may be shown in FIG. 9. Referring to FIG. 9, the communication method may include the following steps:
Step 901: In a second scenario, if the UE receives a registration failure message whose reject cause value is a third reject cause value from a fifth cell, record an occurrence time of the registration failure message.

The second scenario is that the UE registers with an LTE cell. That the UE registers with an LTE cell includes that the UE sends a registration request message to the fifth cell. The third reject cause value is #17, and #17 indicates a network failure.

Specifically, the registration failure message received by the UE may be received by the UE when the UE initiates registration through an ATTACH procedure, or may be received by the UE when the UE initiates registration through a TAU procedure.

Step 902: When the UE receives for a fourth quantity of times the registration failure message whose reject cause value is the third reject cause value, if the fourth quantity of times is greater than or equal to a third threshold and a time interval between two adjacent registration failure messages is less than a fourth threshold, perform an operation of disabling the fifth cell for a fourth preset time, where the third threshold is less than 5.

For example, the third threshold is 3, the fourth threshold is 60s, and the fourth preset time is five minutes.

Usually, after the UE receives the registration failure message, the UE still continues to initiate a registration request to the fifth cell. After the UE receives a rejection request from the fifth cell five times, the UE is prohibited, according to a communication protocol within 12 minutes, from registering with an LTE cell corresponding to a PLMN. In this way, the UE cannot be connected to the network within a period of time in the future, affecting network usage experience of a user. For example, if the UE registers with an LTE cell, and a SIM card used by the UE is a SIM card provided by a mobile operator, when the UE receives a registration failure message for five consecutive times, the UE is prohibited, within 12 minutes, from registering with the LTE cell corresponding to the mobile operator.

Therefore, in this application, when the reject cause value carried in the registration failure message received by the UE is the third reject cause value, not only the occurrence time of the registration failure message is recorded, but also a counter is provided to count the quantity of times of the registration failure message. When the UE receives for a fourth quantity of times a service reject message whose reject cause value is a second reject cause value, if the fourth quantity of times is greater than or equal to the third threshold and a time interval between occurrence times of two adjacent registration failure messages is less than the fourth threshold, the disable operation is performed on the fifth cell, to avoid that the UE still reselects to the fifth cell when performing LTE cell registration again.

For example, alternatively, the third threshold may be set to 2 or 4. The disable operation is performed on the fifth cell if the quantity of times for which the UE receives the registration failure message carrying the reject cause value being the third reject cause value exceeds three times and a time interval between occurrence times of two adjacent registration failure messages is less than one minute. After the disable operation is performed on the fifth cell, when the UE performs LTE cell registration again, the UE does not reselect to the fifth cell, but may reselect to the sixth cell. After reselecting to the sixth cell, the UE may successfully register with the sixth cell. Therefore, a data service is provided for the UE through the sixth cell.

Step 903: The UE sends a registration request message to a sixth cell when the UE initiates LTE cell registration again.

When the fifth cell is disabled, when initiating LTE cell registration again, the UE may reselect to the sixth cell, to initiate a registration request to the sixth cell.

The sixth cell is an LTE cell, and the fifth cell is different from the sixth cell.

As can be learned with reference to step 902, it is stipulated in a communication protocol that, when the UE is rejected by the same reject cause value #17 for five consecutive times, the UE is prohibited, within 12 minutes, from registering with the LTE cell corresponding to the PLMN. Therefore, it is set in this application that, when a quantity of times for which registration of the UE with the fifth cell is rejected is greater than or equal to the third threshold, the UE is provided again with an opportunity to be connected to the network. Specifically, when the quantity of times for which the registration of the UE with the fifth cell is rejected is greater than or equal to the third threshold, a CELL ID of the fifth cell is recorded in a cell blacklist. When the UE initiates LTE cell registration again, the UE no longer continues to send a registration request to the fifth cell, but initiates a registration request to a cell other than the fifth cell. This provides the UE with options of at least two cells, to prevent the UE from being directly prohibited for 12 minutes after the UE is rejected by a same cell.

Further, the third threshold is set to twice, and the method further includes:
Step 904: When the UE receives within second preset duration, a registration failure message whose reject cause value is the third reject cause value from the sixth cell for a fifth quantity of times, perform a disable operation on the sixth cell if the fifth quantity of times is greater than or equal to a fifth threshold and a time interval between two adjacent registration failure messages is less than the fourth threshold.

A sum of the fourth quantity of times and the fifth quantity of times is less than 5.

Step 905: When the UE initiates LTE cell registration again, the UE initiates a registration request to a seventh cell.

For example, in this application, the third threshold is set to 2, to allow the UE to have two attempts to register with the fifth cell. After both the registration attempts fail, the CELL ID of the fifth cell is recorded in the cell blacklist. The fifth threshold is set to 2, and then the UE is caused to initiate registration with the sixth cell. The UE also has two attempts to register with the sixth cell. When the UE initiates registration to the sixth cell and fails twice, the UE is caused to initiate registration to the seventh cell. For example, alternatively, the third threshold may be 1, and the fifth threshold is 3, or the third threshold is 3, and the fifth threshold is 1.

It can be learned according to the communication protocol that when the UE is rejected by the same reject cause value #17 for five consecutive times, the UE is prohibited, within 12 minutes, from registering with the LTE cell corresponding to the PLMN. Therefore, the UE can attempt at most five times. Therefore, based on the communication protocol, in this application, three cells are designed to be provided for the UE, for registration by the UE, to allow the UE to camp on the LTE cell as much as possible, thereby improving an LTE network camping success rate.

Optionally, as shown in FIG. 9, the method further includes:
Step 906: In a case that the terminal device receives for a target quantity of times the registration failure message whose reject cause value is the third reject cause value and the time interval between two adjacent registration failure messages is less than the fourth threshold, perform, for the terminal device for a fifth preset time, an operation of disabling an LTE cell corresponding to a second operator.

The target quantity of times is 5, and the fifth preset threshold is 12 minutes. The second operator is consistent with an operator of a SIM card used by the terminal device. The SIM card used by the terminal device is a SIM card used for sending the registration request message.

For example, when the operator of the SIM card used by the terminal device is a mobile operator, in a case that the terminal device receives five times the registration failure message whose reject cause value is #17, an operation of disabling an LTE cell corresponding to the mobile operator is performed for the terminal device for 12 minutes.

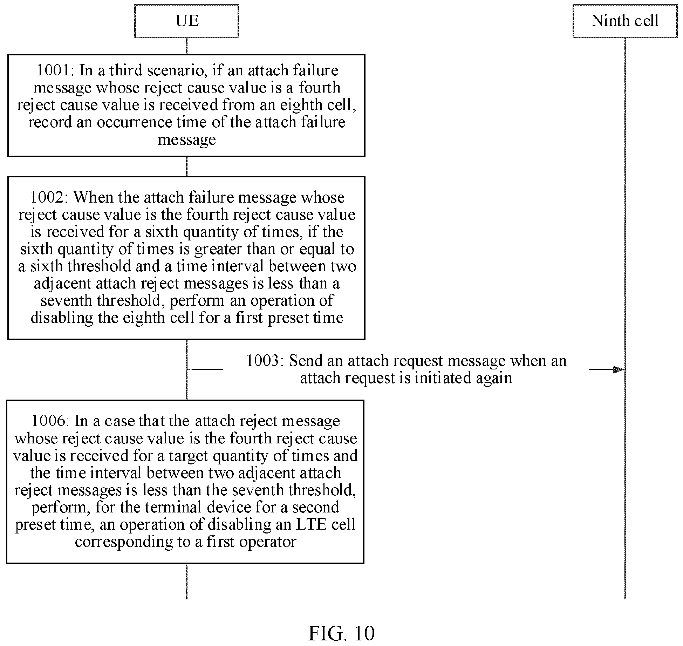

In a possible embodiment, using an example in which the terminal device is UE, a flowchart of a communication method provided in an embodiment of this application may be shown in FIG. 10. Referring to FIG. 10, the communication method may include the following steps:

Step 1001: In a third scenario, if the UE receives an attach reject message whose reject cause value is a fourth reject cause value from an eighth cell, record an occurrence time of the attach reject message.

The third scenario is that the UE fails to register with an IP multimedia system (IP Multimedia Subsystem, IMS), and the UE initiates an attach procedure. The attach procedure includes that the UE sends an attach request message to the eighth cell. The UE receives an attach reject message, the attach reject message includes attach result information, and the attach result information is "EPS only". "EPS only" carries a reject cause value. The reject cause value is #16 or #17, #17 indicates a network failure, and the eighth cell is an LTE cell.

Specifically, the attach reject message received by the UE may be received by the UE when the UE initiates registration through an ATTACH procedure, or may be received by the UE when the UE initiates registration through a TAU procedure.

Step 1002: When the UE receives for a sixth quantity of times the attach reject message whose reject cause value is the fourth reject cause value, if the sixth quantity of times is greater than or equal to a sixth threshold and a time interval between two adjacent attach reject messages is less than a seventh threshold, perform an operation of disabling the eighth cell for a first preset time.

The sixth threshold is less than 5. For example, the sixth threshold is 3, and the first preset time is five minutes.

When the UE fails to register with the IP multimedia system (IP Multimedia Subsystem, IMS), the UE is unavailable in a packet switched (Packet Switch, PS) domain. Consequently, a voice center IMS call cannot be implemented currently. When the UE receives the attach reject message from the eighth cell, the attach result information included in the attach reject message is "EPS only". When the reject cause value carried in "EPS only" is #16 or #17, the UE is unavailable in a circuit switched (Circuit Switched, CS) domain. Consequently, a CS call cannot be implemented currently.

Usually, after the UE receives the attach reject message, the UE still continues to initiate an attach request to the eighth cell. After the UE receives the attach reject message from the eighth cell for five times, the UE is prohibited, according to a communication protocol within a period of time, from registering with an LTE cell corresponding to a PLMN. In this way, the UE cannot be connected to an LTE network within a period of time in the future, affecting user experience.

For example, if a SIM card used by the UE during registration with the IMS is a SIM card provided by a mobile operator, when the UE receives the attach result information of "EPS only" for five consecutive times, and the reject cause value carried in "EPS only" is the fourth reject cause value, the UE is prohibited, within a period of time, from registering with an LTE cell corresponding to the mobile operator. When the UE is prohibited from registering with the LTE cell corresponding to the mobile operator, it is equivalent to the UE not supporting at least an IMS call and a CS call within this period of time.

Therefore, in this application, when the attach result information received by the UE is "EPS only" and the reject cause value carried in "EPS only" is the fourth reject cause value, not only the occurrence time of the attach reject message is recorded, but also a counter is set to count a quantity of times of the attach reject message.

When the UE receives for the sixth quantity of times the attach reject message whose reject cause value is the fourth reject cause value, the UE performs a disable operation on the eighth cell if the sixth quantity of times is greater than or equal to the sixth threshold and a time interval between occurrence times of two adjacent pieces of information is less than the seventh threshold, to avoid that the UE still initiates an attach request to the eighth cell when the UE performs LTE cell registration again.

For example, that the UE receives for the sixth quantity of times the attach reject message whose reject cause value is the fourth reject cause value may be that the UE receives three times the attach reject message whose reject cause value is #16, or that the UE receives three times the attach reject message whose reject cause value is #17.

It is assumed that the sixth threshold is 3, and the seventh threshold is 60s. If a quantity of times for which the reject cause value carried in "EPS only" is #16 exceeds three times, and a time interval between occurrence times of two adjacent attach reject messages is less than 60s, the disable operation is performed on the eighth cell. If a quantity of times for which the reject cause value carried in "EPS only" is #17 exceeds three times, and a time interval between occurrence times of two adjacent attach reject messages is less than 60s, the disable operation is performed on the eighth cell. After performing the disable operation on the eighth cell, when the UE performs LTE cell registration again, the UE no longer initiates an attach request to the eighth cell. The UE initiates an attach request to another cell, so that an LTE communication service is provided for the UE through the another cell.

Optionally, the sixth threshold may alternatively be set to 2 or 4, and the sixth threshold is less than 5.

Step 1003: The UE sends an attach request message to a ninth cell when the UE initiates an attach request again.

When the eighth cell is disabled, the UE may reselect to the ninth cell when initiating the attach request again, and then send the attach request message to the ninth cell.

It is stipulated in the communication protocol that when the UE is rejected by the same reject cause value of #16 or #17 for five consecutive times, the UE is prohibited, within a period of time, from registering with the LTE cell corresponding to the PLMN. Therefore, it is set in this application that, when a quantity of times for which registration of the UE with the eighth cell is rejected exceeds the sixth threshold, the UE is provided again with an opportunity to be connected to the LTE network. Specifically, when the quantity of times for which the registration of the UE with the eighth cell is rejected is greater than or equal to the sixth threshold, a CELL ID of the eighth cell is recorded in a cell blacklist. When the UE initiates an attach request again, the UE no longer continues to send an attach request message to the eighth cell, but initiates an attach request message to a cell other than the eighth cell. This is equivalent to providing options of at least two cells for the UE, to prevent the UE from being directly prohibited from an LTE standard network for 12 minutes after being rejected by a same cell.

In this application, two cells are provided for the UE in the foregoing manner, enabling the UE to initiate an attach request, thereby improving an LTE network camping success rate.

Optionally, the method further includes:
Step 1004: When the UE receives for a seventh quantity of times the attach reject message whose reject cause value is the fourth reject cause value, the UE performs a disable operation on the ninth cell if the seventh quantity of times is greater than or equal to an eighth threshold and a time interval between two adjacent registration failure messages is less than a ninth threshold.

A sum of the sixth threshold and the eighth threshold is equal to 5.

Step 1005: The UE sends an attach request message to a tenth cell when the UE initiates an attach request again.

Specifically, in this application, the sixth threshold is set, to provide the UE with a plurality of attempts to attach to the eighth cell. After the plurality of attempts fail, the CELL ID of the eighth cell is recorded in the cell blacklist. Next, the eighth threshold is set, to provide the UE with a plurality of attempts to attach to the ninth cell. After the plurality of attempts fail, the CELL ID of the ninth cell is recorded in the cell blacklist, and the UE initiates an attach request to the tenth cell. It can be learned according to the communication protocol that, when the UE is rejected by the reject cause value of #16 for five consecutive times, or is rejected by the reject cause value of #17 for five consecutive times, the UE is prohibited, within a period of time, from registering with the LTE cell corresponding to the PLMN. Therefore, the UE may attempt at most five times. Correspondingly, the UE may attempt registration on at most five different cells.

In practice, it is common to have the UE attempt two or three times on a same cell before switching to another cell. Therefore, in this application, three cells are provided for the UE in the foregoing manner, enabling the UE to initiate an attach request, thereby improving an LTE network camping success rate. For example, the sixth threshold may be 1, and the eighth threshold may be 3; or the sixth threshold may be 3, and the eighth threshold may be 1; or the sixth threshold may be 2, and the eighth threshold may be 2.

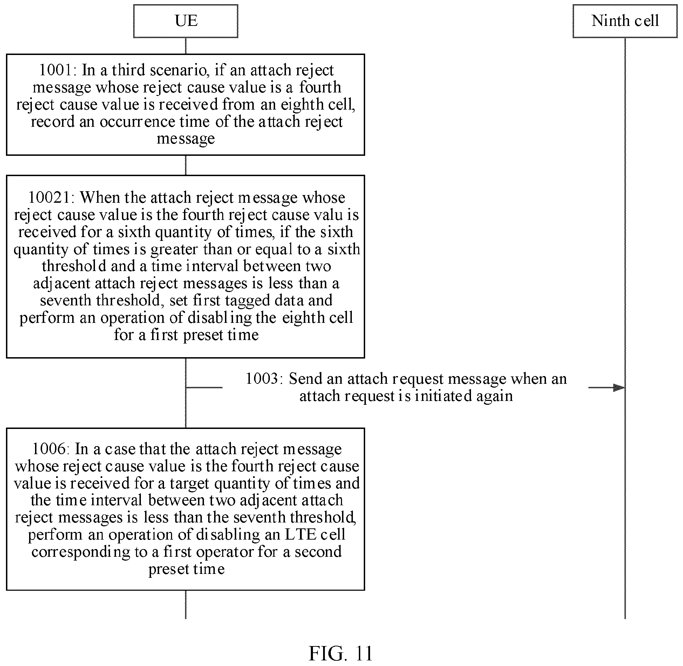

Optionally, as shown in FIG. 11, after step 1002, the method further includes:
Step 10021: When the UE receives for a sixth quantity of times an attach reject message whose reject cause value is a fourth reject cause value, if the sixth quantity of times is greater than or equal to a sixth threshold and a time interval between two adjacent attach reject messages is less than a seventh threshold, the UE sets first tagged data and performs an operation of disabling the eighth cell for a first preset time.

The first tagged data is used to identify that a TAU complete message is not to be sent.

Specifically, when the first tagged data is "true", the TAU complete message is not to be sent. The first tagged data is cleared by default in the following scenarios: for example, (1) when an EMM sends an LTE deactive request to RRC; (2) when sim data is cleared during card insertion and removal; (3) when the UE initiates Attach; (4) when the UE initiates TAU; (5) when the UE receives TAU ACCEPT; (6) when a global variable is reset; (7) during LTE deactive; and (8) when data is initialized, and the like.

It can be learned with reference to 1002 and 1003 that, when the UE receives for the sixth quantity of times the attach reject message whose reject cause value is the fourth reject cause value, the UE performs a disable operation on the eighth cell if the sixth quantity of times is greater than or equal to the sixth threshold and a time interval between two adjacent registration failure messages is less than the seventh threshold. When the UE initiates an attach request again, the UE sends an attach request message to the ninth cell.

When the eighth cell and the ninth cell are not under a same TAC, conflicting messages occurs according to a signaling interaction process stipulated by the communication protocol. Specifically, after the UE sends a TAU request message to the eighth cell, the eighth cell sends a TAU accept message to the UE in response to the TAU request message. The UE sends a TAU complete message to the eighth cell in response to the TAU accept message. After step 1001 and step 1002, the disable operation is performed on the eighth cell. Therefore, the TAU complete message to be sent to the eighth cell may be received by the ninth cell.

After the eighth cell is disabled, the UE reselects to the ninth cell, and sends a TAU request message to the ninth cell. Because the ninth cell has received the TAU complete message, the ninth cell needs to wait for duration corresponding to T3430 and T3411 to process the TAU request message. Duration corresponding to T3430 is 15s, and duration corresponding to T3411 is 10s. Therefore, in this process, the ninth cell has a blank period of 25 seconds. Within the 25s, the ninth cell cannot process the TAU request message sent by the UE, and therefore, the UE cannot connect to the network within the 25s. In this case, the TAU complete message and the TAU request message are referred to as conflicting messages. After the 25s ends, the ninth cell can continue to receive the TAU request message sent by the UE. This directly affects network usage experience of the user.

Therefore, to avoid this case, in this application, the first tagged data is set. When the UE receives for the sixth quantity of times the attach reject message whose reject cause value is the fourth reject cause value, the first tagged data is directly set to true, if the sixth quantity of times is greater than or equal to the sixth threshold and the time interval between two adjacent registration failure messages is less than the seventh threshold. After finding that the first tagged data is set to true, the UE does not send the TAU complete message to the eighth cell. Correspondingly, there is no blank period of 25 seconds subsequently, thereby avoiding poor network usage experience.

When the eighth cell and the ninth cell are under a same TAC, the foregoing case does not occur, and correspondingly, the first tagged data does not need to be set.

Optionally, as shown in FIG. 10, the method further includes:
Step 1006: In a case that the terminal device receives for a target quantity of times the attach reject message whose reject cause value is the fourth reject cause value and the time interval between two adjacent attach reject messages is less than the seventh threshold, perform, for the terminal device for a second preset time, an operation of disabling an LTE cell corresponding to a first operator, where the first operator is consistent with an operator of a SIM card used by the terminal device.

The target quantity of times is 5. The second preset time is 12 minutes. The first operator is consistent with the operator of the SIM card used by the terminal device. The SIM card used by the terminal device is a SIM card used for sending the attach reject message.

For example, when the operator of the SIM card used by the terminal device is a mobile operator, when the terminal device receives five times the attach reject message whose reject cause value is #16, an operation of disabling an LTE cell corresponding to the mobile operator is performed for the terminal device for 12 minutes.

It may be understood that, the methods and/or the steps implemented by the network device or the terminal device in the foregoing embodiments may alternatively be implemented by a component (for example, a chip or a circuit) that can be used in the network device or the terminal device.

Optionally, an embodiment of this application further provides a communication apparatus. The communication apparatus is configured to implement the foregoing methods. The communication apparatus may be the network device or the terminal device in the foregoing method embodiments, an apparatus including the network device or the terminal device, or a component that can be used in the network device or the terminal device. It may be understood that to implement the foregoing functions, the communication apparatus includes corresponding hardware structures and/or software modules for performing the functions. A person skilled in the art should be easily aware that, in combination with the units and algorithm steps of the examples described in the embodiments disclosed in this specification, this application can be implemented in a form of hardware or a combination of hardware and computer software. Whether a function is performed by hardware or computer software driving hardware depends on particular applications and design constraints of the technical solutions. A person skilled in the art may use different methods to implement the described functions for each particular application, but it should not be considered that the implementation goes beyond the scope of this application.

In the embodiments of this application, the communication apparatus may be divided into functional modules based on the foregoing method embodiments. For example, each functional module may be obtained through division based on each corresponding function, or two or more functions may be integrated into one processing module. The integrated module may be implemented in the form of hardware, or may be implemented in a form of a software functional module. It should be noted that, in the embodiments of this application, the module division is an example and is merely logical function division, and there may be another division manner during actual implementation.

Some other embodiments of this application provide an electronic device. The electronic device may include: a communication module, a memory, and one or more processors. The communication module, the memory, and the processor are coupled. The memory is configured to store computer program code, and the computer program code includes computer instructions.

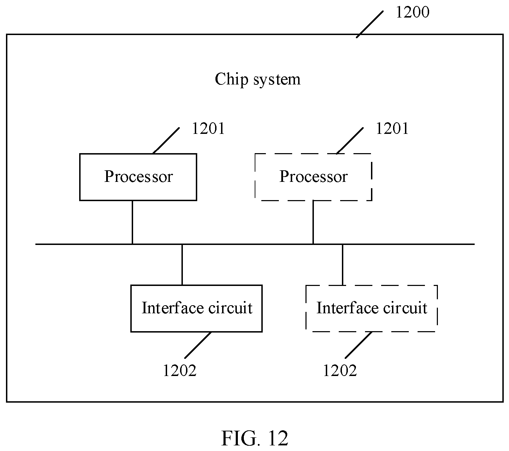

An embodiment of this application further provides a chip system. As shown in FIG. 12, the chip system 1200 includes at least one processor 1201 and at least one interface circuit 1202. The processor 1201 and the interface circuit 1202 may be interconnected by using a line. For example, the interface circuit 1202 may be configured to receive a signal from another apparatus (for example, a memory of an electronic device). For another example, the interface circuit 1202 may be configured to send a signal to another apparatus (for example, the processor 1201).

For example, the interface circuit 1202 may read an instruction stored in the memory, and send the instruction to the processor 1201. When the instruction is executed by the processor 1201, the electronic device is enabled to perform the steps in the foregoing embodiments. Certainly, the chip system may further include other discrete devices. This is not specifically limited in this embodiment of this application.

It should be understood that sequence numbers of the foregoing processes do not mean execution sequences in the embodiments of this application. The execution sequences of the processes should be determined according to functions and internal logic of the processes, and should not be construed as any limitation on the implementation processes of the embodiments of this application.

A person of ordinary skill in the art may be aware that, in combination with the examples described in the embodiments disclosed in this specification, units and algorithm steps may be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application, but it should not be considered that the implementation goes beyond the scope of this application.

A person skilled in the art can clearly understand that for convenience and conciseness of description, for a specific working process of the foregoing system, apparatus, and unit, reference may be made to a corresponding process in the foregoing method embodiments, and details are not described herein again.

In the several embodiments provided in this application, it should be understood that the disclosed system, device, and method may be implemented in other manners. For example, the device embodiment described above is merely an example. For example, the unit division is merely a logical function division. In an actual implementation, another division manner may be used. For example, a plurality of units or components may be combined or integrated into another system, or some features may be ignored or not performed. In addition, the displayed or discussed mutual couplings or direct couplings or communication connections can be implemented by using some interfaces. The indirect couplings or communication connections between the devices or units may be implemented in electronic, mechanical, or other forms.

The units described as separate components may or may not be physically separate, and components displayed as units may or may not be physical units, that is, may be located in one position, or may be distributed on a plurality of network units. Some or all of the units may be selected according to actual needs to achieve the objectives of the solutions of the embodiments.

In addition, functional units in the embodiments of this application may be integrated into one processing unit, or each of the units may be physically separated, or two or more units may be integrated into one unit.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of procedures or functions according to the embodiments of this application are generated. The computer may be a general-purpose computer, a special-purpose computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, or microwave) manner. The computer-readable storage medium may be any available medium accessible by a computer, or a data storage device such as a server or a data center that includes one or more available medium integrations. The available medium may be a magnetic medium (for example, a floppy disk, a hard disk, or a magnetic tape), an optical medium (for example, a DVD), a semiconductor medium (for example, a solid-state drive (Solid State Disk, SSD)), or the like.

Terms such as "component", "module", and "system" used in this application are intended to indicate computer-related entities. The computer-related entities may be hardware, firmware, combinations of hardware and software, software, or running software. For example, the component may be, but is not limited to, a process that runs on a processor, a processor, an object, an executable file, a thread of execution, a program, and/or a computer. In an example, both an application that runs on a computing device and the computing device may be components. One or more components may exist in a process and/or a thread of execution, and the components may be located in one computer and/or distributed between two or more computers. In addition, these components can be executed from various computer-readable media that have various data structures. These components may communicate in a local and/or remote process manner based on, for example, signals having one or more data packets (for example, data from one component that interacts with a local system, another component of a distributed system, and/or interacts with another system by using a network such as the Internet in a manner of a signal).

All aspects, embodiments, or features are presented in this application by describing a system that may include a plurality of devices, components, modules, and the like. It should be appreciated and understood that, each system may include another device, component, module, and the like, and/or may not include all devices, components, modules, and the like described with reference to the accompanying drawings. In addition, a combination of these solutions may be used.

In addition, in the embodiments of this application, the word "example" is used to represent giving an example, an illustration, or a description. Any embodiment or design solution described as an "example" in this application should not be explained as being more preferred or having more advantages than another embodiment or design solution. Exactly, use of the word "example" is intended to present a concept in a specific manner.

In the embodiments of this application, "information (information)", "signal (signal)", "message (message)", and "channel (channel)" sometimes may be interchangeably used. It should be noted that, when a difference between "information", "signal", "message", and "channel" is not emphasized, meanings expressed by "information", "signal", "message", and "channel" are consistent. "Of (of)", "corresponding or relevant (corresponding or relevant)", and "corresponding (corresponding)" sometimes may be interchangeably used. It should be noted that, when a difference between "of", "corresponding or relevant", and "corresponding" is not emphasized, meanings expressed by "of", "corresponding or relevant", and "corresponding" are consistent. "System" and "network" sometimes may be interchangeably used. When a difference between "system" and "network" is not emphasized, meanings expressed by "system" and "network" are consistent. For example, "communication network" refers to "communication system".

The network architecture and the service scenario described in the embodiments of this application are intended to describe the technical solutions in the embodiments of this application more clearly, and do not constitute a limitation on the technical solutions provided in the embodiments of this application. A person of ordinary skill in the art may learn that with evolution of the network architecture and emergence of new service scenarios, the technical solutions provided in the embodiments of this application are also applicable to similar technical problems.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by a terminal device, an attach request message to an eighth cell if the terminal device fails to register with an IP multimedia system IMS, and recording, by the terminal device if the terminal device receives an attach reject message whose reject cause value is a fourth reject cause value, an occurrence time of the attach reject message, wherein the eighth cell is an LTE cell;
performing, by the terminal device when the terminal device receives for a sixth quantity of times the attach reject message whose reject cause value is the fourth reject cause value, an operation of disabling the eighth cell for a first preset time, in a case that the sixth quantity of times is greater than or equal to a sixth threshold and a time interval between two adjacent attach reject messages is less than a seventh threshold, wherein the sixth threshold is less than 5; and
performing, for the terminal device for a second preset time, an operation of disabling an LTE cell corresponding to a first operator, in a case that the terminal device receives for a target quantity of times the attach reject message whose reject cause value is the fourth reject cause value and the time interval between two adjacent attach reject messages is less than the seventh threshold, wherein the first operator is consistent with an operator of a SIM card used by the terminal device.

2. The method according to claim 1, wherein after the performing an operation of disabling the eighth cell for a first preset time, the method further comprises:
sending, by the terminal device, an attach request message to a ninth cell, wherein the ninth cell is an LTE cell, and the eighth cell is different from the ninth cell.

3. The method according to claim 1, wherein when the terminal device receives for a sixth quantity of times the attach reject message whose reject cause value is the fourth reject cause value, in a case that the sixth quantity of times is greater than or equal to a sixth threshold and a time interval between two adjacent attach reject messages is less than a seventh threshold, the method comprises:
controlling, when the terminal device receives for the sixth quantity of times the attach reject message whose reject cause value is the fourth reject cause value, the terminal device not to send a tracking area update complete message to the eighth cell, in a case that the sixth quantity of times is greater than or equal to the sixth threshold and the time interval between two adjacent attach reject messages is less than the seventh threshold.

4. The method according to claim 3, wherein the controlling, when the terminal device receives for the sixth quantity of times the attach reject message whose reject cause value is the fourth reject cause value, the terminal device not to send a tracking area update complete message to the eighth cell, in a case that the sixth quantity of times is greater than or equal to the sixth threshold and the time interval between two adjacent attach reject messages is less than the seventh threshold comprises:
setting first tagged data, when the terminal device receives for the sixth quantity of times the attach reject message whose reject cause value is the fourth reject cause value, in a case that the sixth quantity of times is greater than or equal to the sixth threshold and the time interval between two adjacent attach reject messages is less than the seventh threshold, wherein the first tagged data is used to identify that the terminal device skips sending the tracking area update complete message to the eighth cell; and
skipping, by the terminal device according to the first tagged data, sending the tracking area update complete message to the eighth cell.

5. The method according to any one of claims 1 to 4, wherein the fourth reject cause value is #16 or #17.

6. The method according to any one of claims 1 to 4, wherein the sixth threshold is 3, and the seventh threshold is 60s.

7. A communication method, wherein the method comprises:
sending, by a terminal device, a registration request message to a first cell;
receiving, by the terminal device, a plaintext ID query message from the first cell, wherein the plaintext ID query message is used to request authentication of identity information of the terminal device, and the plaintext ID query message is a message that is not subject to integrity protection and encrypted protection;
sending, by the terminal device, the identity information of the terminal device to the first cell in response to the plaintext ID query message;
receiving, by the terminal device, a registration reject message and an RRC RELEASE message from the first cell, wherein a reject cause value carried in the registration reject message is a first reject cause value, and the first reject cause value is #9; and
performing, by the terminal device in a case that the RRC RELEASE message comprises an instruction for redirecting to a low-standard cell, an operation of disabling the first cell for a third preset time.

8. The method according to claim 7, wherein the RRC RELEASE message is used to indicate the terminal device to release a link, and after the sending a registration reject message and an RRC RELEASE message to the terminal device according to the identity information, the method further comprises:
releasing, by the terminal device, the link in response to the RRC RELEASE message; and
continuing, by the terminal device, sending the registration request message to the first cell, and performing, if the terminal device receives for a first quantity of times the registration reject message whose reject cause value is the first reject cause value, the operation of disabling the first cell for the third preset time, in a case that the first quantity of times is greater than or equal to a first threshold.

9. The method according to claim 8, wherein after the performing the operation of disabling the first cell, the method further comprises:
sending, by the terminal device, a registration request message to a second cell, wherein the first cell is different from the second cell.

10. The method according to any one of claims 7 to 9, wherein the first threshold is 3.

11. A communication method, wherein the method comprises:
sending, by a terminal device if the terminal device successfully registers with a third cell in a standalone SA architecture, a service request message to the third cell, and recording, by the terminal device if the terminal device receives a service reject message whose reject cause value is a second reject cause value, an occurrence time of the service reject message; and
controlling, if the terminal device receives the service reject message whose reject cause value is the second reject cause value for a second quantity of times within target preset duration starting from the occurrence time of the service reject message, the terminal device to redirect to a fourth cell in a case that the second quantity of times is greater than or equal to a second threshold, wherein the fourth cell is an LTE cell.

12. The method according to claim 11, wherein before the if the terminal device receives the service reject message whose reject cause value is the second reject cause value for a second quantity of times within target preset duration starting from the occurrence time of the service reject message, the method further comprises:
setting, when the terminal device receives the service reject message whose reject cause value is the second reject cause value for a third quantity of times within the target preset duration starting from the occurrence time of the service reject message, the third quantity of times to 0 if the third quantity of times is less than the second threshold and the terminal device triggers a target operation, wherein the target operation is a flight mode operation or a card insertion and removal operation.

13. The method according to claim 11, wherein the terminal device comprises a first SIM card and a second SIM card, and the controlling, if the terminal device receives, within target preset duration from the occurrence time of the service reject message, the service reject message whose reject cause value is the second reject cause value for a second quantity of times, the terminal device to redirect to a fourth cell in a case that the second quantity of times is greater than or equal to a second threshold comprises:
controlling, at a first moment, when the first SIM card in the terminal device is in a first state, and the second SIM card receives the service reject message whose reject cause value is the second reject cause value for the second quantity of times within the target preset duration starting from the occurrence time of the service reject message, the second SIM card to redirect to the fourth cell if the second quantity of times is greater than or equal to the second threshold, wherein the first moment is a moment at which the first SIM card switches from the first state to a second state, the first state is a call state, and the second state is a call end state.

14. The method according to any one of claims 11 to 13, wherein the second reject cause value is #9 or #10.

15. The method according to any one of claims 11 to 13, wherein the target preset duration is 60s, and the second threshold is 3.

16. The method according to any one of claims 11 to 13, wherein a plurality of service reject messages are from a same cell or different cells in the SA architecture.

17. A communication method, wherein the method comprises:
sending, by a terminal device, a registration request message to a fifth cell, and recording, by the terminal device if the terminal device receives a registration failure message whose reject cause value is a third reject cause value, an occurrence time of the registration failure message, wherein the fifth cell is an LTE cell;
performing, by the terminal device when the terminal device receives for a fourth quantity of times the registration failure message whose reject cause value is the third reject cause value, an operation of disabling the fifth cell for a fourth preset time, if the fourth quantity of times is greater than or equal to a third threshold and a time interval between two adjacent registration failure messages is less than a fourth threshold, wherein the third threshold is less than 5; and
performing, for the terminal device for a fifth preset time, an operation of disabling an LTE cell corresponding to a second operator, in a case that the terminal device receives for a target quantity of times the registration failure message whose reject cause value is the third reject cause value and the time interval between two adjacent registration failure messages is less than the fourth threshold, wherein the second operator is consistent with an operator of a SIM card used by the terminal device.

18. The method according to claim 17, wherein the method further comprises:
sending, by the terminal device, a registration request message to a sixth cell, wherein the sixth cell is an LTE cell, and the fifth cell is different from the sixth cell.

19. The method according to claim 17 or 18, wherein the third reject cause value is #17.

20. The method according to claim 17 or 18, wherein the third threshold is 3, and the fourth threshold is 60s.

21. A communication apparatus, comprising: a processor and a memory, wherein the memory is configured to store computer-executable instructions, and the processor is configured to execute the instructions stored in the memory; and when the communication apparatus runs, the processor runs the instructions to enable the communication apparatus to perform the method according to any one of claims 1 to 6, 7 to 10, 11 to 16, or 17 to 20.
